# EUROPÄISCHE PATENTANMELDUNG

(11) **EP 4 592 268 A1**
(43) Veröffentlichungstag der Anmeldung: **30.07.2025**
(21) Anmeldenummer: 24153648.1
(22) Anmeldetag: 24.01.2024
(51) Int. Cl.: C04B 35/106, C04B 35/185, C04B 35/443, C04B 35/482, C04B 35/565, C04B 35/63, C04B 35/66

(54) **FEUERFESTES MATERIAL, VERFAHREN ZUR DESSEN HERSTEL-LUNG UND VERWENDUNG DESSELBEN**

(71) Anmelder: Refractory Intellectual Property GmbH & Co. KG, 1100 Wien (AT)
(72) Erfinder: TAFERNER, Harald, 8753 Fohsdorf (AT); REIF, Gerald, 8762 Oberzeirîng (AT); PRIBIL, Bernhard, 8922 Landl (AT)
(74) Vertreter: Glawe, Delfs, Moll

(57) **Zusammenfassung**

Die Erfindung betrifft ein feuerfestes Material, das bei einer Temperatur von mindestens 1300°C, vorzugsweise von 1300°C bis 1750°C, thermisch behandelt ist, dass es eine nadelige Struktur aufweist und eine Kombination aus einer ersten Phase, einer zweiten Phase und einer dritten Phase umfasst, wobei:
die erste Phase 2-10 Gew.-% C, <5 Gew.-% N, 30-40 Gew.-% O, 50-70 Gew.-% Al und <5 Gew.-% Si, bezogen auf den Gesamtanteil der ersten Phase, umfasst,
die zweite Phase 1-7 Gew.-% C, 3-8 Gew.-% N, 25-35 Gew.-% O, 55-65 Gew.-% Al und <5 Gew.-% Si, bezogen auf den Gesamtanteil der zweiten Phase, umfasst, und
die dritte Phase <7 Gew.-% C, 14-28 Gew.-% N, 10-15 Gew.-% O, 52-63 Gew.-% Al und <20 Gew.-% Si, bezogen auf den Gesamtanteil der dritten Phase, umfasst,
einen Versatz zum Herstellen eines feuerfesten Materials, einen Grünkörper hergestellt aus einem Versatz, ein Verfahren zum Herstellen eines feuerfesten Materials sowie die Verwendung von solchen.

## Beschreibung

Die vorliegende Erfindung betrifft ein feuerfestes Material, einen Versatz zum Herstellen eines feuerfesten Materials, einen Grünkörper hergestellt aus einem Versatz, ein Verfahren zum Herstellen eines feuerfesten Materials sowie die Verwendung von solchen.

Feuerfeste Materialien finden zum Beispiel in industriellen Hochtemperaturverfahren Anwendung und müssen daher auch unter widrigen Umständen und bei sehr hohen Temperaturen stabil bleiben.

Sie werden zum Beispiel in der Stahlindustrie verwendet, wo sie unter anderem zur Herstellung von Erzeugnissen wie Funktionalprodukten (z.B. Lochsteine oder Pralltöpfe) und/oder von Erzeugnissen für die Zustellung und/oder Instandhaltung von Stahlpfannen, Verteilern und anderen metallurgischen Aggregaten dienen. Solche mit Erzeugnissen aus feuerfesten Materialien zugestellte metallurgische Aggregate werden wiederum zur Aufnahme und Verarbeitung von geschmolzenem Stahl und anderen flüssigen Metallprodukten verwendet. Feuerfeste Materialien halten somit andere Stoffe und Gemenge während ihrer Verbrennung, Umwandlung, Schmelze, Sprengung, Verfeuerung, Einschmelzung und Formung sicher und müssen daher thermischer, mechanischer und chemischer Belastung standhalten.

Es ist daher erstrebenswert, ein feuerfestes Material mit guten physikalischen Eigenschaften, wie zum Beispiel hoher Festigkeit und hoher Temperaturwechselbeständigkeit, bereitzustellen, mit dem eine Vielzahl unterschiedlicher feuerfester Erzeugnisse hergestellt werden kann.

Der vorliegenden Erfindung liegt daher die Aufgabe zugrunde, ein feuerfestes Material bereitzustellen, das sehr gute physikalische Eigenschaften, wie insbesondere eine sehr gute Heißfestigkeit bzw. Heißabrasionsbeständigkeit, eine gute Temperaturwechselbeständigkeit und eine niedrige thermische Leitfähigkeit, aufweist. Des Weiteren soll es auch möglich sein, das feuerfeste Material für eine Vielzahl von unterschiedlichen feuerfesten Erzeugnissen, insbesondere auch komplexeren, vergossenen Erzeugnissen, nutzen zu können. Daher ist es auch die Aufgabe der vorliegenden Erfindung, dass das feuerfeste Material mit seinen vorteilhaften Eigenschaften ausgehend von einem Versatz erhalten werden kann, der vorteilhafte Verarbeitungseigenschaften, wie insbesondere gute Fließeigenschaften, aufweist. Ebenso ist es die Aufgabe der vorliegenden Erfindung, einen Grünkörper aus einem Versatz herzustellen, der vorteilhafte physikalische und mechanische Eigenschaften, wie eine erhöhte Festigkeit (insbesondere hohe Kaltdruck- und Kaltbiegefestigkeit) nach Trocknen aufweist, so dass damit einhergehend eine verbesserte Handhabbarkeit sowie eine erleichterte Verarbeitbarkeit des Grünkörpers zum feuerfesten Material (und damit zu einer Vielzahl von unterschiedlichen feuerfesten Erzeugnissen wie oben beschrieben) ermöglicht werden.

Die Erfindung löst diese Aufgabe durch ein feuerfestes Material, das bei einer Temperatur von mindestens 1300°C, vorzugsweise von 1300° bis 1750°C, thermisch behandelt ist, dass es eine nadelige Struktur aufweist und eine Kombination aus einer ersten Phase, einer zweiten Phase und einer dritten Phase umfasst, wobei die erste Phase 2-10 Gew.-% C, <5 Gew.-% N, 30-40 Gew.-% O, 50-70 Gew.-% Al und <5 Gew.-% Si, bezogen auf den Gesamtanteil der ersten Phase, umfasst,

die zweite Phase >1 Gew.-% C, 3-8 Gew.-% N, 25-35 Gew.-% O, 55-65 Gew.-% Al und <5 Gew.-% Si, bezogen auf den Gesamtanteil der zweiten Phase, umfasst,

die dritte Phase <7 Gew.-% C, 14-28 Gew.-% N, 10-15 Gew.-% O, 52-63 Gew.-% Al und <20 Gew.-% Si, bezogen auf den Gesamtanteil der dritten Phase, umfasst.

Zunächst seien einige im Rahmen der Erfindung verwendete Begriffe erläutert.

Der Begriff "feuerfestes Material" wird in der vorliegenden Anmeldung so verwendet, wie er dem Fachmann aus dem Stand der Technik geläufig ist. Es handelt sich also um ein Material, das feuer- und hochtemperaturbeständig ist. Das feuerfeste Material wird vorzugsweise aus anorganischen Rohstoffmaterialien hergestellt. Insbesondre kann das Material hohen Temperaturen von mindestens 1500°C oder höher, standhalten, ohne zu erweichen. Das Material weist vorzugsweise einen Kegelfallpunkt größer SK 17 (= ISO 150) auf, welches in etwa einer Temperatur von 1500°C entspricht (vgl. DIN 51 060). Der Kegelfallpunkt kann nach ISO 528 und DIN EN 993-12 bestimmt werden. Das Material ist somit geeignet, eine gewisse Zeitdauer mit flüssigen Metall- und Stahlprodukten in Kontakt stehen zu können, ohne dabei selbst seine äußere Form zu verlieren.

Im Rahmen der vorliegenden Erfindung handelt es sich bei einem "Versatz" um eine formlose bzw. ungeformte Masse, die zur Herstellung des feuerfesten Materials verwendet wird.

Der Begriff "Grünkörper" wird in der vorliegenden Anmeldung so verwendet, wie es dem Fachmann aus dem Stand der Technik geläufig ist. Es handelt sich somit um eine geformte oder in Form vergossene, aber ungebrannte Masse, die sich noch einfach bearbeiten lässt. Der Begriff "Grünkörper nach Trocknen" wird in der vorliegenden Anmeldung so verwendet, dass damit ein Grünkörper gemeint ist, der nach Norm DIN EN ISO 1927-5 bei einer Temperatur von (110 ± 5)°C bis zur Massenkonstanz getrocknet wurde.

Im Rahmen der vorliegenden Erfindung handelt es sich bei einer "Phase" um einen räumlichen Bereich in einem Festkörper, welcher sich sowohl chemisch als auch morphologisch (d.h. durch Form, Gestalt und Struktur) von seiner Umgebung unterscheidet.

Vorzugsweise umfasst die erste Phase 2-10 Gew.-% C, 0,001-5 Gew.-% N, 30-40 Gew.-% O, 50-70 Gew.-% Al und 0,001-5 Gew.-% Si, bezogen auf den Gesamtanteil der ersten Phase.

Vorzugsweise umfasst die zweite Phase, die 1-7 Gew.-% C, 3-8 Gew.-% N, 25-35 Gew. % O, 55-65 Gew.-% Al und 0,001-5 Gew.-% Si, bezogen auf den Gesamtanteil der zweiten Phase.

Vorzugsweise umfasst die dritte Phase 0,001-7 Gew.-% C, 14-28 Gew.-% N, 10-15 Gew.-% O, 52-63 Gew.-% Al und 0,001-20 Gew.-% Si, bezogen auf den Gesamtanteil der dritten Phase.

Erfindungsgemäß ist, dass das feuerfeste Material eine Kombination der ersten Phase, der zweiten Phase und der dritten Phase umfasst.

Erfindungsgemäß ist es bevorzugt, dass die erste Phase Al₄O₄C umfasst oder aus Al₄O₄C besteht.

Erfindungsgemäß ist es ferner bevorzugt, dass die zweite Phase Al₂₈C₆N₆O₂₁ umfasst oder aus Al₂₈C₆N₆O₂₁ besteht.

Erfindungsgemäß ist es bevorzugt, dass die dritte Phase eine Verbindung ausgewählt aus SiAl₆O₂N₆, SiAl₅O₂N₅, SiAl₄O₂N₄, Si₃Al₇O₃N₉ und Gemischen hiervon umfasst. Erfindungsgemäß ist es ferner bevorzugt, dass die dritte Phase SiAl₆O₂N₆ umfasst oder aus SiAl₆O₂N₆ besteht.

Das feuerfeste Material kann eine vierte Phase umfassen, wobei die vierte Phase <5 Gew.-% C, 26-36 Gew.-% N, <8 Gew.-% O, 56-66 Gew.-% Al und <5 Gew.-% Si, bezogen auf den Gesamtanteil der vierten Phase, umfasst und die vierte Phase vorzugsweise AlN umfasst oder aus AlN besteht.

Ferner kann die vierte Phase 0,001-5 Gew.-% C, 26-36 Gew.-% N, 0,001-8 Gew.-% O, 56-66 Gew.-% Al und 0,001-5 Gew.-% Si, bezogen auf den Gesamtanteil der vierten Phase, umfassen.

Das Vorhandensein der nadeligen Struktur bzw. Phasen mit nadeliger Struktur ist vorzugsweise mittels Rasterelektronenmikroskopie bestimmbar.

Bevorzugt ist die Zusammensetzung der Phasen mittels Rasterelektronenmikroskopie (REM), bei einer Anregungsspannung von 10 kV und einen Probenstrom von 1 nA mit einem energiedispersiven Detektor, bestimmt.

Die nadelige Struktur weist bevorzugt Nadeln einer Länge in einem Bereich von 0,1-50 µm, vorzugsweise 0,1-30 µm, weiter vorzugsweise 2-30 µm und/oder einer Dicke in einem Bereich von 0,01-8 µm, vorzugsweise 0,2-5 µm, gemessen mittels Rasterelektronenmikroskopie, bei einer Anregungsspannung von 10 kV und einen Probenstrom von 1 nA, auf.

Bevorzugt ist ein minimales Verhältnis von Längen zu Dicken (zumindest für einen Teil) der Nadeln mindestens 4:1. Bevorzugt weisen mindestens 20%, bevorzugter mindestens 40% der Nadeln der nadeligen Struktur ein minimales Verhältnis der Längen zu Dicken von mindestens 4:1 auf. Bevorzugt weisen mindestens 20%, bevorzugter mindestens 40% der Nadeln der nadeligen Struktur in einem Bereich von wenigstens 1000 µm x 1000 µm ein minimales Verhältnis der Längen zu Dicken der Nadeln von mindestens 4:1 auf. Dieses kann mittels Rasterelektronenmikroskopie, bei einer Anregungsspannung von 10 kV und einen Probenstrom von 1 nA bestimmt werden.

Ferner weist das feuerfeste Material vorzugsweise lochartige (bzw. an Anschliffen kreisförmig erscheinende) Strukturen auf. Bevorzugt weisen die lochartigen oder kreisförmig erscheinenden Strukturen einen (überwiegenden) Teil der nadeligen Strukturen auf. In einer bevorzugten Ausführungsform ist ein (überwiegender) Teil der Nadeln an den Oberflächen der lochartigen bzw. kreisförmig erscheinenden Strukturen ausgebildet.

Erfindungsgemäß ist es bevorzugt, dass ein Anteil der Phasen mit nadeliger Struktur mindestens 0,01 Gew.-% vorzugsweise 0,1 Gew.-%, bezogen auf den Gesamtanteil des feuerfesten Materials, beträgt.

Das feuerfeste Material weist bevorzugt eine offene Porosität in einem Bereich von 10,0-25,0 Vol.%, gemessen nach DIN EN ISO 1927-6, und/oder eine Rohdichte in einem Bereich von 2,95-3,70 g/cm3, gemessen nach DIN EN ISO 1927-6, auf.

Bevorzugt handelt es sich bei dem feuerfesten Material um feuerfeste Funktionalprodukte, bevorzugter feuerfeste Guss- und/oder Presserzeugnisse, noch bevorzugter feuerfeste Erzeugnisse im Flow-Control-Bereich, noch weiter bevorzugter Schieberplatten, Wechselausgüsse, Schattenrohre, Stopfen, Tauchrohre, Innenhülsen, Wehre, Dämme, Pralltöpfe und Düsen. Dabei soll der Begriff "Funktionalprodukt" im Rahmen der vorliegenden Erfindung derart verstanden werden, dass es sich dabei um ein Erzeugnis handelt, welches in Teilen oder vollständig aus dem feuerfesten Material hergestellt wird und einer Formgebung, durch Vergießen und/oder Formen, unterworfen wurde.

Die Erfindung hat den Vorteil, dass das erfindungsgemäße feuerfeste Material sehr gute physikalische Eigenschaften aufweist. Insbesondere zeigt das feuerfeste Material zum Beispiel eine sehr gute Heißfestigkeit / Heißabrasionsbeständigkeit und zugleich auch eine sehr gute Temperaturwechselbeständigkeit. Das erfindungsgemäße feuerfeste Material ist hochtemperaturbeständig und kann Temperaturen von mindestens 1700°C standhalten, ohne zu erweichen. Es weist eine nadelige Struktur mit sehr stabilen Phasen auf, die sich *in-situ* bilden. Die feinen Nadeln, die sich in vielen Bereichen des Materials bilden, sind höchstwahrscheinlich für die gute Temperaturwechselbeständigkeit verantwortlich.

Des Weiteren zeigt das erfindungsgemäße feuerfeste Material eine geringe thermische Wärmeleitfähigkeit. Dieses hat nicht nur den Vorteil, dass das feuerfeste Material gute Isolationseigenschaften aufweist, sondern führt auch dazu, dass die Gießleistung der aus dem feuerfesten Material erhaltenen Erzeugnisse verbessert wird. Denn eine geringe thermische Wärmeleitfähigkeit des Materials führt dazu, dass eine Anlagerung fester Bestandteile oder Teilchen an das feuerfeste Material, d.h. unerwünschtes "Clogging", vermieden wird.

Gegenstand der Erfindung ist ferner ein Versatz zum Herstellen eines erfindungsgemäßen feuerfesten Materials, vorzugsweise nach einem der Ansprüche 1 bis 8, wobei der Versatz die folgenden Bestandteile umfasst:
a) Körnige Komponente im Grobanteil mit einer Partikelgröße in einem Bereich von 0,5-10 mm, ausgewählt aus MA-Spinell (Magnesiumaluminatspinell), Sintertonerde, Edelkorund, Braunkorund, Graukorund, Mullit, Bauxit, Andalusit, SiC, Schamotte, zirkoniumhaltige Komponenten und Gemischen hiervon;
b) Körnige Komponente im Feinanteil mit einer Partikelgröße in einem Bereich von <0,5 mm, ausgewählt aus Sintertonerde, Edelkorund, zirkoniumhaltige Komponenten und Gemischen hiervon;
c) Feinteiliges Al₂O₃, vorzugsweise kalzinierter Tonerde im Feinanteil mit einer Partikelgröße in einem Bereich von <0,5 mm;
d) Kohlenstoff, vorzugsweise Graphit und/oder Ruß, weiter vorzugsweise ein Gemisch aus Graphit und Ruß, noch weiter vorzugsweise ein Gemisch aus Graphit und Ruß mit einem Mischverhältnis in einem Bereich von 1:2 bis 2:1, noch weiter vorzugsweise ein Gemisch aus Graphit und Ruß mit einem Mischverhältnis von 1:1;
e) metallisches Aluminiumpulver (Al-Pulver);
f) Trockenes Phenolharzbindemittel, vorzugsweise trockenes pulverförmiges Phenolharzbindemittel; und
g) Kieselsol (Kieselsäure in wässriger kolloidaler Suspension), vorzugsweise Kieselsäure enthaltend SiO₂-Nanoparti-kel in wässriger kolloidaler Suspension.

Der erfindungsgemäße Versatz wird vorzugsweise aus einer Trockenmasse (vorzugsweise umfassend Bestandteile a) bis f)) durch das Mischen mit Kieselsol (Kieselsäure in wässriger kolloidaler Suspension; umfassend Bestandteil g)) hergestellt. In der Trockenmasse liegen die Bestandteile chemisch unverändert vor. Erst durch Zugabe des Kieselsols (der Kieselsäure in wässriger kolloidaler Suspension) kommt es zu einer Bindung der Masse, die auf einer sog. Sol-Gel-Reaktion basiert.

Im Rahmen der vorliegenden Erfindung beinhaltet der Versatz somit bereits sämtliche Bestandteile, die für die Herstellung des feuerfesten Materials vorhanden sein müssen.

Der Versatz umfasst die körnige Komponente im Grobanteil mit einer Partikelgröße in einem Bereich von 0,5-10 mm, ausgewählt aus MA-Spinell (Magnesiumaluminatspinell), Sintertonerde, Edelkorund, Braunkorund, Graukorund, Mullit, Bauxit, Andalusit, SiC, Schamotte, zirkoniumhaltige Komponenten und Gemischen hiervon. Bevorzugt wird die körnige Komponente im Grobanteil aus einer Gruppe von nicht-basischen Komponenten ausgewählt. Mit der Verwendung von nicht-basischen Komponenten gehen eine bessere Verarbeitbarkeit sowie eine vorteilhaftere Härtungszeit nach Mischen mit dem Kieselsol (Kieselsäure in wässriger kolloidaler Suspension) einher. Denn in der Regel wird der Bindungsprozess (sog. Sol-Gel-Prozess) durch basische Komponenten stark beschleunigt, durch die Verwendung von geeigneten nicht-basischen Komponenten kann hier also eine optimale Balance aus Verarbeitbarkeit und Härtungszeit eingestellt werden.

Der Versatz umfasst zudem die körnige Komponente im Feinanteil mit einer Partikelgröße in einem Bereich von <0,5 mm. Diese dient insbesondere zur Matrixfüllung. Des Weiteren konnte festgestellt werden, dass die körnige Komponente im Feinanteil die Fließeigenschaften des Versatzes, insbesondere beim Gie-ßen, positiv beeinflusst.

Ferner umfasst der Versatz Kohlenstoff. Kohlenstoff ist als Quelle für die Ausbildung der *in-situ* gebildeten Phasen unverzichtbar. In einer bevorzugten Ausführungsform liegt ein Gemisch aus Graphit und Ruß mit einem Mischverhältnis in einem Bereich von 1:2 bis 2:1, bevorzugter ein Gemisch aus Graphit und Ruß mit einem Mischverhältnis von 1:1 vor. Auf diese Weise ergibt sich ein sehr guter Kompromiss zwischen den erzielten physikalischen Eigenschaften des feuerfesten Materials und den Verarbeitungseigenschaften des Versatzes. Dabei konnte festgestellt werden, dass Graphit eher einen positiven Einfluss auf die Benetzungseigenschaften (und somit die Infiltrations- und Verschlackungsbeständigkeit) hat, während der reaktivere Ruß die Bildung der *in-situ* gebildeten Phasen positiv beeinflusst.

Des Weiteren umfasst der Versatz metallisches Aluminium-Pulver. Das metallische Aluminium-Pulver hat insbesondere die vorteilhafte Funktion, den Abbau (bzw. die Oxidation) von Kohlenstoff zu verhindern. Vorzugsweise weist das Aluminium-Pulver eine Partikelgröße <0,1 mm, weiter vorzugsweise <0,075 mm, noch weiter vorzugsweise <0,065 mm auf.

Des Weiteren umfasst der Versatz trockenes (vorzugsweise pulverförmiges) Phenolharzbindemittel. Das trockene (vorzugsweise pulverförmige) Phenolharzbindemittel hat insbesondere die vorteilhafte Funktion, die Festigkeit des Grünkörpers nach Trocknen deutlich zu erhöhen. Bei dem verwendeten Phenolharzbindemittel handelt es sich z.B. um ein handelsübliches Phenol-Formaldehydharz vom Typ Novolak. Ein Beispiel für ein solches trockenes (vorzugsweise pulverförmiges) Phenolharzbindemittel ist Borofen BLR 3509. Durch diese Bindemittel-Zugabe wird eine signifikant erhöhte Festigkeit und damit eine erleichterte Handhabbarkeit und verbesserte Transportfähigkeit des Grünkörpers nach Trocknen erzielt. Dies zeigt sich u.a. in einer stark erhöhten Kaltdruck- und Kaltbiegefestigkeiten des Grünkörpers im Vergleich zu einem Grünkörper, der aus einem Versatz ohne eine solche Bindemittelzugabe hergestellt wurde. Auf diese Weise kann etwa die Ausschussrate in der Herstellung des feuerfesten Materials aufgrund von zerbrochenen Grünkörpern deutlich reduziert werden. Überraschend hat sich dabei herausgestellt, dass selbst eine geringe Zugabe an Bindemittel ausreicht, um für die Festigkeit des Grünkörpers einen großen vorteilhaften Effekt zu erzielen. Gleichzeitig wird die Feuerfestigkeit des feuerfesten Materials durch diese Zugabe nicht negativ beeinträchtigt.

Des Weiteren umfasst der Versatz Kieselsol (Kieselsäure in wässriger kolloidaler Suspension), vorzugsweise Kieselsäure enthaltend SiO₂-Nanopartikel in wässriger kolloidaler Suspension. Hierbei handelt es sich um eine Suspension von feinen amorphen, nicht porösen und typischerweise kugelförmigen Kieselsäurepartikeln in einer wässrigen Phase. Kolloidale Kieselsäure ist nicht dasselbe wie übliche (getrocknete) Kieselsäure (z.B. (dried) fumed silica). Das Kieselsol (die Kieselsäure in wässriger kolloidaler Suspension) dient insbesondere als Anmischflüssigkeit und Bindemittel für das feuerfeste Material.

Bevorzugt ist ein Feststoffanteil (Anteil an SiO₂-Partikel) im Kieselsol (in der wässrigen kolloidalen Kieselsäuresuspension) in einem Bereich von 20 bis 50 Gew.-%, bevorzugter 30 bis 50 Gew.-%, bezogen auf das Gesamtgewicht der Kieselsols.

Der Ersatz einer üblichen Kieselsäure mit Wasser gegen ein Kieselsol, also eine Kieselsäure in wässriger kolloidaler Suspension, ist von erheblichem Vorteil. Denn bei der Verwendung von üblicher Kieselsäure würde das Metall (Aluminium) nach dem Mischen der Bestandteile in bestimmten pH-Bereichen mit Wasser reagieren. Diese Reaktion ist stark exotherm, und es würde dabei zudem Wasserstoffgas (H₂) entstehen. Des Weiteren würde sich beim Einsatz von Aluminium im Randbereich eine Aluminiumoxidschicht (Al₂O₃) bilden. Diese Reaktionen gilt es zu vermeiden. Denn zum einen ist die Bildung von H₂ aus Sicherheitsgründen nachteilhaft, zum anderen würde weniger Aluminium für die *in-situ* gebildeten Phasen zur Verfügung stehen. Des Weiteren würde es aber auch aufgrund der exothermen Reaktion und Gasbildung zur Bildung von Rissen und Lagen im Grünkörper kommen. Dieses wird durch den Einsatz eines Kieselsols, also einer kolloidalen Kieselsäure bzw. einer kolloidalen Kieselsäuresuspension verhindert.

Der Versatz kann ein oder mehrere der folgenden Bestandteile in den folgenden Mengen, bezogen auf den Gesamtanteil der Zusammensetzung des Versatzes, umfassen:
a) 50-80 Gew.-%, vorzugsweise 53-70 Gew.-%, weiter vorzugsweise 55-67 Gew.-%, noch weiter vorzugsweise etwa 59 Gew.-%, körnige Komponente im Grobanteil mit einer Partikelgröße in einem Bereich von 0,5-10 mm;
b) 5-35 Gew.-%, vorzugsweise 7-30 Gew.-%, weiter vorzugsweise 10-30 Gew.-%, noch weiter vorzugsweise etwa 19 Gew.-%, körnige Komponente im Feinanteil mit einer Partikelgröße in einem Bereich von <0,5 mm;
c) 0,05-15 Gew.-%, vorzugsweise 2-12 Gew.-%, weiter vorzugsweise 5-10 Gew.-%, noch weiter vorzugsweise etwa 7 Gew.-%, feinteiliges Al₂O₃;
d) 2-10 Gew.-%, vorzugsweise 3-8 Gew.-%, weiter vorzugsweise 3,5-6 Gew.-%, noch weiter vorzugsweise etwa 4,5 Gew.-%, Kohlenstoff;
e) 3-10 Gew.-%, vorzugsweise 4-9 Gew.-%, weiter vorzugsweise 5-8 Gew.-%, noch weiter vorzugsweise etwa 5 Gew.-%, metallisches Aluminiumpulver (Al-Pulver);
f) 0,1-4 Gew.-%, vorzugsweise 0,2-2 Gew.-%, weiter vorzugsweise 0,3-1 Gew.-%, noch weiter vorzugsweise etwa 0,5 Gew.-%, trockenes (vorzugsweise pulverförmiges) Phenolharzbindemittel;
g) 4-15 Gew.-%, vorzugsweise 5-12 Gew.-%, weiter vorzugsweise 6-8 Gew.-%, noch weiter vorzugsweise etwa 7 Gew.-%, Kieselsol (Kieselsäure in wässriger kolloidaler Suspension), bevorzugt Kieselsäure enthaltend SiO₂-Nanopartikel in wässriger kolloidaler Suspension, wobei der Feststoffanteil (Anteil der SiO₂-Partikel) vorzugsweise in einem Bereich von 20 bis 50 Gew.-%, weiter vorzugsweise 30 bis 50 Gew.-%, bezogen auf das Gesamtgewicht des Kieselsols (der wässrigen kolloidalen Kieselsäuresuspension), liegt.

Gegenstand der Erfindung ist zudem auch ein Grünkörper, hergestellt aus einem erfindungsgemäßen Versatz, vorzugsweise einem Versatz nach Anspruch 9 oder 10, wobei der Grünkörper nach Trocknen vorzugsweise eine offene Porosität von etwa 10-25 Vol.%, gemessen nach DIN EN ISO 1927-6, und/oder eine Rohdichte in einem Bereich von 2,90-3,70 g/cm3, vorzugsweise etwa 2,98 g/cm3, gemessen nach DIN EN ISO 1927-6, aufweist.

Der Grünkörper weist nach dem Trocknen bevorzugt eine Kaltdruckfestigkeit von größer als 40 MPa, bevorzugter größer als 50 MPa, besonders bevorzugt größer als 60 MPa auf, gemessen nach DIN EN ISO 1927-6, und/oder eine Kaltbiegefestigkeit von größer 6 MPa, bevorzugter größer als 8 MPa, besonders bevorzugt größer als 9 MPa auf, gemessen nach DIN EN ISO 1927-6. Diese Eigenschaften des Grünkörpers führen zu einer guten Festigkeit und somit sehr guten Handhabbarkeit und Transportfähigkeit des Grünkörpers.

Gegenstand der Erfindung ist ferner auch ein Verfahren zum Herstellen eines erfindungsgemäßen feuerfesten Materials, vorzugsweise eine feuerfesten Materials nach einem der Ansprüche 1 bis 8, wobei das Verfahren die folgenden Schritte umfasst:
i. Bereitstellen eines erfindungsgemäßen Versatzes, vorzugsweise nach einem der Ansprüche 9 oder 10;
ii. Herstellen eines Grünkörpers aus dem Versatz, und
iii. Erhitzen des Grünkörpers auf eine Temperatur von mindestens 1300°C, vorzugsweise auf eine Temperatur in einem Bereich von 1300°C bis 1750°C.

Dabei erfolgt das Bereitstellen des erfindungsgemäßen Versatzes in Schritt i. vorzugsweise ausgehend von einer Trockenmasse (vorzugsweise umfassend Bestandteile a) bis f)), welche durch das Mischen mit Kieselsol (Kieselsäure in wässriger kolloidaler Suspension; umfassend Bestandteil g)) hergestellt wird.

Vorzugsweise handelt es sich bei dem Herstellen des Grünkörpers aus dem Versatz in Schritt ii. um ein Vergießen und/oder Formen.

In Schritt iii. des Verfahrens erfolgt die Erhitzung des Grünkörpers auf eine Temperatur von mindestens 1300°C. Vorzugsweise wird dabei der Grünkörper auf eine Temperatur im Bereich von 1300 bis 1750°C erhitzt. Dadurch können insbesondere die erfindungsgemäßen Eigenschaften des feuerfesten Materials erhalten werden. Das Erhitzen des Grünkörpers erfolgt dabei bevorzugt in einer Gasatmosphäre aus Luft mit reduziertem Sauerstoffgehalt. Die Reduktion des Sauerstoffgehalts in der Luft dient dazu, die äußerliche Oxidation des Grünkörpers zu verhindern. Die Reduktion des Sauerstoffgehaltes kann beispielsweise durch Einbetten des Grünkörpers in Kohlegries erzielt werden.

Gegenstand der Erfindung ist des Weiteren auch ein feuerfestes Material, das eine nadelige Struktur aufweist und eine Kombination aus einer ersten Phase, einer zweiten Phase und einer dritten Phase umfasst, wobei
die erste Phase 2-10 Gew.-% C, <5 Gew.-% N, 30-40 Gew.-% O, 50-70 Gew.-% Al und <5 Gew.-% Si, bezogen auf den Gesamtanteil der ersten Phase, umfasst,
die zweite Phase >1 Gew.-% C, 3-8 Gew.-% N, 25-35 Gew.-% O, 55-65 Gew.-% Al und <5 Gew.-% Si, bezogen auf den Gesamtanteil der zweiten Phase, umfasst,
die dritte Phase <7 Gew.-% C, 14-28 Gew.-% N, 10-15 Gew.-% O, 52-63 Gew.-% Al und <20 Gew.-% Si, bezogen auf den Gesamtanteil der dritten Phase, umfasst,
hergestellt durch ein erfindungsgemäßes Verfahren, vorzugsweise ein Verfahren gemäß Anspruch 13.

Gegenstand der Erfindung ist ebenfalls die Verwendung eines erfindungsgemäßen feuerfesten Materials, vorzugsweise nach einem der Ansprüche 1 bis 8, eines Grünkörpers hergestellt aus einem Versatz nach einem der Ansprüche 9 bis 10 zur Herstellung von feuerfesten Erzeugnissen für Stahlanwendungen, insbesondere Stahlpfanne, Verteiler, Lochsteine, CAS-OB-Glocken, feuerfeste Erzeugnisse für den Roheisenbereich, insbesondere Gusserzeugnissen, und/oder feuerfesten Erzeugnissen für den Flow-Control-Bereich, insbesondere Schieberplatten, Wechselausgüssen, Schattenrohre, Stopfen, Ausgüsse Tauchrohre, Innenhülsen, Wehre, Dämme, Pralltöpfe und Düsen.

Im Rahmen der Erfindung werden unter Produkten im Flow-Control-Bereich, feuerfeste Erzeugnisse verstanden, die es ermöglichen zum Beispiel flüssige Metall- oder Stahlprodukte zu enthalten oder den Fluss dieser zu lenken oder zu verhindern. Produkte im Flow Control-Bereich benötigen neben guten physikalischen Eigenschaften, wie einer hohen Festigkeit, auch gute Verarbeitungseigenschaften der zu verarbeitenden Masse, um die zum Teil komplex geformten Bauteile herstellen zu können. Ein wesentlicher Vorteil der Flow-Control-Produkte, vorzugsweise basierend auf gegossenen Produkten, im Vergleich zu ISO-gepressten Produkten, wird in einer erheblichen Kostenreduzierung gesehen.

Ein weiterer Vorteil der Erfindung besteht somit darin, dass mit dem erfindungsgemäßen Versatz und/oder dem erfindungsgemäßen Verfahren nicht nur feuerfeste Materialien mit sehr guten physikalischen Eigenschaften, wie einer hohen Heißfestigkeit usw., erhalten werden können, sondern auch gute Verarbeitungseigenschaften der zu verarbeitenden Masse für die Herstellung komplexerer Bauteile, insbesondere auch durch Vergießen, erzielt werden können.

Die Erfindung wird nun anhand einiger vorteilhafter Ausführungsformen unter Bezugnahmen auf die beigefügten Zeichnungen beispielhaft beschrieben. Es zeigt:
- Fig. 1:: eine Aufnahme des erfindungsgemäßen feuerfesten Materials mittels Lichtmikroskopie.
- Fig. 2:: eine mittels Rasterelektronenmikroskopie erzeugte Aufnahme eines in Fig. 1 gezeigten Teilbereichs.
- Fig. 3:: eine weitere Aufnahme des erfindungsgemäßen feuerfesten Materials mittels Lichtmikroskopie.
- Fig. 4:: eine mittels Rasterelektronenmikroskopie erzeugte Aufnahme des anderen in Fig. 3 markierten Bereiches.
- Fig. 5:: die Schlackebeständigkeit des erfindungsgemäßen feuerfestes Materials (links) im Vergleich zu der eines bekannten feuerfesten Materials (rechts).
- Fig. 6:: die Ergebnisse eines Versuches mit dem erfindungsgemäßen feuerfesten Material und Vergleichsmaterialien zum Erweichungsverhalten unter Druck (Druckerweichen).

### Herstellung eines feuerfesten Materials:

Vorliegend wird erläutert, wie ein erfindungsgemäßes feuerfestes Material ausgehend von einem erfindungsgemäßen Versatz hergestellt werden kann.

Zunächst wurde ein Versatz, umfassend die folgenden Bestandteile hergestellt:
- 58,4 Gew.-%: Körnige Komponente bestehend aus Sintertonerde im Grobanteil mit einer Partikelgröße in einem Bereich von 0,5-10 mm
- 9,4 Gew.-%: Sintertonerde (<0,5 mm)
- 8,9 Gew.-%: Edelkorund (<0,2 mm)
- 6,5 Gew.-%: kalzinierte Tonerde 1A
- 2,3 Gew.-%: Graphit Hunan 80/200 GBK
- 2,3 Gew.-%: Ruß Thermal geperlt
- 4,7 Gew.-%: metallisches Aluminiumpulver (Al met) (<0,063 mm)
- 0,5 Gew.-%: trockenes (pulverförmiges) Phenolharzbindemittel
- 7,0 Gew.-%: Kieselsol (Kieselsäure in wässriger kolloidaler Suspension), mit 40 Gew.-% Feststoffanteil (Anteil der SiO₂-Partikel), bezogen auf das Gesamtgewicht des Kieselsols (der wässrigen kolloidalen Kieselsäuresuspension).

Der Versatz wurde erhalten, indem ein Kieselsol (Kieselsäure in wässriger kolloidaler Suspension), enthaltend SiO₂-Nanopartikel, mit einer Trockenmasse, welche die übrigen Bestandteile des Versatzes umfasste, gemischt wurde. Aus diesem Versatz wurde dann durch Vergießen ein Grünkörper hergestellt. Im Anschluss wurde der Grünkörper in einer Gasatmosphäre (Luft mit reduziertem Sauerstoffgehalt) auf eine Temperatur von 1500°C erhitzt. Die Reduktion des Sauerstoffgehalts in der Gasatmosphäre wurde durch Einbetten des Grünkörpers in Kohlegries erzielt. Auf diese Weise wurde das erfindungsgemäße feuerfeste Material erhalten.

### Physikalische Eigenschaften:

Im Folgenden werden die physikalischen Eigenschaften eines erfindungsgemäßen Grünkörpers und eines erfindungsgemäßen feuerfesten Materials wiedergegeben, die nach dem oben beschriebenen Verfahren hergestellt wurden. Als Vergleich werden zusätzlich die physikalischen Daten zweier nicht erfindungsgemäßer feuerfesten Materialien gegenübergestellt. Hierbei handelt es sich um DELTEK A115 von RHI Magnesita sowie einen Grünkörper bzw. ein feuerfestes Material, die aus einem Versatz ohne Zugabe von trockenem (pulverförmigen) Phenolharzbindemittel nach oben beschriebenem Verfahren hergestellt wurden.

**Tabelle 1: physikalische Eigenschaften eines erfindungsgemäßen Grünkörpers, eines erfindungsgemäßen feuerfesten Materials und zweier Vergleichsmaterialien.**

| | **Erfindungs-gemäßer Grünkörper bzw. erfindungsgemäßes feuerfestes Material** | **Grünkörper bzw. feuerfestes Material ohne trockenes (pulverförmiges) Phenolharzbindemittel** | **Vergleichs material (DELTEK A115)** |
|---|---|---|---|
| **Grünkörper nach Trocknen bei 110°C, gemäß Norm DIN EN ISO 1927-5** | | | |
| Rohdichte (DIN EN ISO 1927-6) [g/cm³] | 2,98 | 2,96 | 2,53 |
| offene Porosität (DIN EN ISO 1927-6) [Vol. %] | 13,0 | 14,0 | 17,3 |
| Kaltdruckfestigkeit (DIN EN ISO 1927-6) [MPa] | 50,0 | 35, 0 | - |
| Kaltbiegefestigkeit (DIN EN ISO 1927-6) [MPa] | 8, 0 | 5, 0 | 8, 4 |
| Heißbiegefestigkeit bei 1500°C in reduzierender Atmosphäre (mit gem. DIN EN ISO 1927-5 gegossenen Proben, im Format 130x20x20mm, Messprinzip gemäß ISO 5013) [MPa] | 15,0 | 17,0 | 8, 0 |

| **nach Erhitzen auf 1000°C in reduzierender Atmosphäre, gemäß DIN EN ISO 1927-5** | | | |
|---|---|---|---|
| Rohdichte (DIN EN ISO 1927-6) [g/cm³] | 3, 0 | 3, 0 | - |
| offene Porosität (DIN EN ISO 1927-6) [Vol. %] | 12,0 | 13,0 | - |
| Kaltdruckfestigkeit (DIN EN ISO 1927-6) [MPa] | 150,0 | 170,0 | - |
| Kaltbiegefestigkeit (DIN EN ISO 1927-6) [MPa] | 23,0 | 24,0 | - |
| **nach Erhitzen auf 1500°C in reduzierender Atmosphäre, gemäß DIN EN ISO 1927-5** | | | |
| Rohdichte (DIN EN ISO 1927-6) [g/cm³] | 3, 0 | 3, 0 | - |
| offene Porosität (DIN EN ISO 1927-6) [Vol. %] | 14,0 | 13,0 | - |
| Kaltdruckfestigkeit (DIN EN ISO 1927-6) [MPa] | 120 | 140 | - |
| Kaltbiegefestigkeit (DIN EN ISO 1927-6) [MPa] | 19,0 | 24,0 | - |

| **Thermische Leitfähigkeit (nach Dr. Klasse*) [W/mK]:** | | | |
|---|---|---|---|
| 200°C | 5, 2 | 5, 2 | 14,7 |
| 400°C | 5, 2 | 5, 2 | 13,7 |
| 600°C | 4, 9 | 4, 9 | 12,4 |
| 800°C | 4,6 | 4,6 | 12,0 |
| 1000°C | 4,7 | 4,7 | 11,7 |

| | | | |
|---|---|---|---|
| *Klasse, F.; Heinz, A.; Hein, J.: Vergleichsverfahren zur Ermittlung der Wärmeleitfähigkeit keramischer Werkstoffe. Ber. DKG 34 (1957), S. 183 - 189. | | | |

Tabelle 1 zeigt, dass der erfindungsgemäße Grünkörper nach Trocknen eine deutlich höhere Festigkeit als ein Grünkörper nach Trocknen aufweist, der aus einem Versatz ohne Zugabe von trockenem (pulverförmigen) Phenolharzbindemittel hergestellt wurde. Dies zeigt sich vor allem in den deutlich erhöhten Werten für die Kaltdruck- und Kaltbiegefestigkeit und ermöglicht somit einen unbeschadeten Transport von solchen erfindungsgemäßen Grünkörpern zum Kunden sowie einen sicheren Einsatz von solchen erfindungsgemäßen Grünkörpern beim Kunden. Zudem zeigt das erfindungsgemäße feuerfeste Material nur eine geringe thermische Wärmeleitfähigkeit im Vergleich zum bekannten Material DELTEK A115. Die erheblich geringere thermische Wärmeleitfähigkeit des erfindungsgemäßen feuerfesten Materials sorgt für bessere Isolationseigenschaften und hat somit einen positiven Einfluss auf die Fließeigenschaften des Materials, da unerwünschtes Clogging verhindert werden kann. Unter Clogging wird das Anlagern fester Bestandteile bzw. Teilchen in einem Bauteil oder Ausgussystem verstanden, welches zu einer Störung im Gießverlauf und somit zu einer verminderten Gießleistung des feuerfesten Materials führen kann.

### Messmethoden:

Bei den Messungen der Eigenschaften gemäß DIN EN ISO 1927-6 wurde die in dieser Norm spezifizierte Geometrie D verwendet.

Das feuerfeste Material wurde mittels Licht- und Rasterelektronenmikroskopie untersucht. Lichtmikroskopische Untersuchungen wurden mit einem NIKON Eclipse LV150 durchgeführt. Analysen mit dem Rasterelektronenmikroskop wurden mit einem JEOL JSM-6460 bzw. mit einem JEOL JSM-7900F Rasterelektronenmikroskop durchgeführt.

Die Zusammensetzung der einzelnen Phasen konnte mittels Rasterelektronenmikroskopie bei einer Anregungsspannung von 10 kV und einen Probenstrom von 1 nA mit einem energiedispersiven Detektor bestimmt werden. Die rasterelektronenmikroskopischen Abbildungen wurden mit einem BSE-Detektor erzeugt.

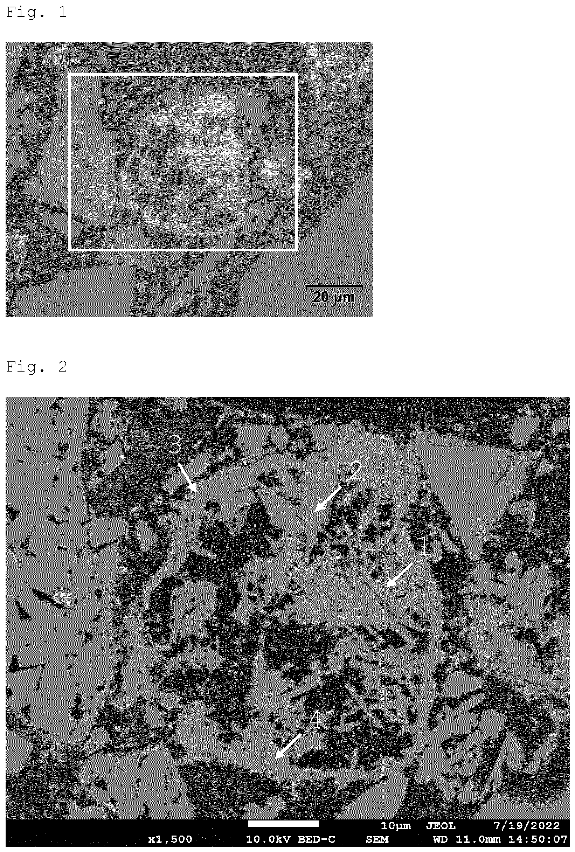

Fig. 1 zeigt eine Aufnahme eines erfindungsgemäßen feuerfesten Materials mittels Lichtmikroskopie, aus der die nadelige Struktur des Materials ersichtlich ist. Insbesondere sind auch Bereiche mit lochartig bzw. kreisförmig erscheinenden Strukturen zu erkennen, in denen die nadeligen Strukturen des Materials vorzugsweise ausgebildet sind. Die Nadeln weisen bevorzugt eine geringe Dicke in einem Bereich von 0,01-8 µm, bevorzugter 0,2-5 µm auf. Es wird angenommen, dass die feinen Nadeln, die sich in vielen Bereichen bilden, höchstwahrscheinlich für die sehr gute Temperaturwechselbeständigkeit des feuerfesten Materials verantwortlich sind. Zusätzlich wird angenommen, dass die kreisförmigen Strukturen in dem feuerfesten Material eine Rissfortpflanzung verhindern können.

Fig. 2 zeigt eine mittels Rasterelektronenmikroskopie erzeugte Aufnahme des feuerfesten Materials aus Fig. 1, wobei in Fig. 2 der in der Fig. 1 markierte Bereich abgebildet ist. Aus Fig. 2 ist die nadelige Struktur des Materials noch deutlicher ersichtlich. In Fig. 2 sind die Bereiche 1 bis 4 markiert, in denen entsprechend die vier Phasen, die in dieser Anmeldung beschrieben sind, vorliegen.

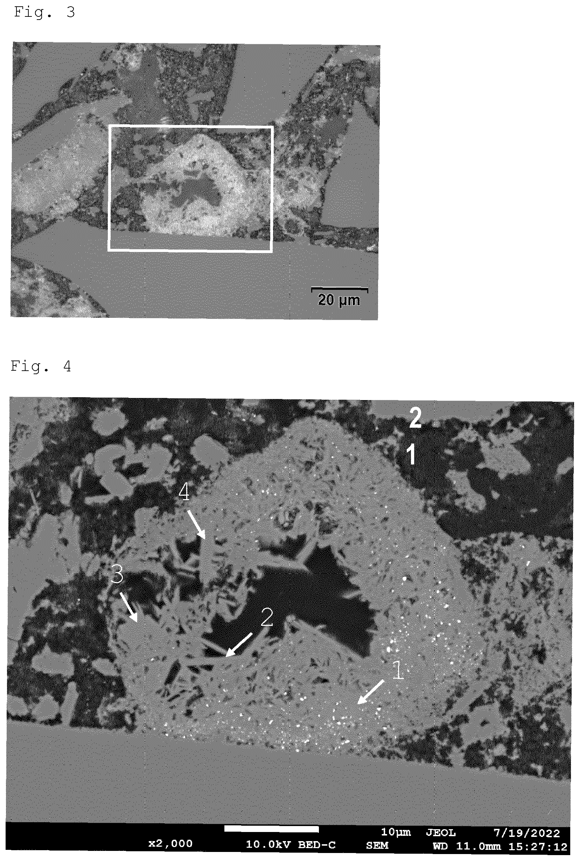

Fig. 3 zeigt eine weitere Aufnahme des erfindungsgemäßen feuerfesten Materials mittels Lichtmikroskopie, aus der weitere Bereiche mit lochartiger Struktur ersichtlich sind, in denen sich die nadeligen Strukturen des Materials *in-situ* ausgebildet haben.

Fig. 4 zeigt eine mittels Rasterelektronenmikroskopie erzeugte Aufnahme des in Fig. 3 markierten Bereichs. Auch in diesem Bereich weist das feuerfeste Material eine nadelige Struktur auf. In Fig. 4 sind weiters die Bereiche 1 bis 4 markiert, in denen entsprechend die vier Phasen, die in dieser Anmeldung beschrieben sind, vorliegen.

### Versuch zur Schlackebeständigkeit:

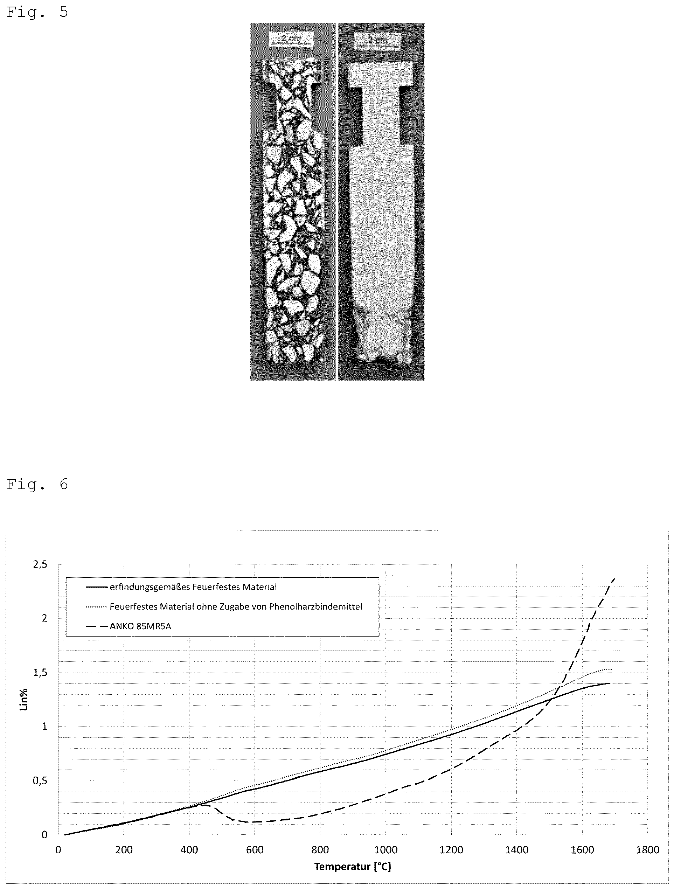

Das erfindungsgemäße feuerfeste Material wurde sowohl gegen eine saure (C/S = 0,8) als auch gegen eine basische Schlackenzusammensetzungen (C/S = 3,2) auf Schlackebeständigkeit getestet. Die Schlackebeständigkeit ist die Fähigkeit des feuerfesten Materials, der schädigenden Wirkung geschmolzener Schlacken zu widerstehen. Das erfindungsgemäße feuerfeste Material zeigte dabei, insbesondere auch im Vergleich zu einem bekannten feuerfesten Material für Stahlpfannen (Vergleichsmaterial COMPRIT 185HMV von RHI Magnesita), eine sehr gute Schlackenbeständigkeit (vgl. Fig. 5, links ist das erfindungsgemäße Material, rechts das Vergleichsmaterial COMPRIT 185HMV von RHI Magnesita zu sehen).

### Versuch zum Druckerweichen (Erweichungsverhalten unter Druck):

Des Weiteren wurde mit dem feuerfesten Material ein Versuch zum Erweichungsverhalten unter Druck (Druckerweichen) durchgeführt. Hierfür wurde zum einen das erfindungsgemäße feuerfeste Material und zum anderen ein feuerfestes Material, das aus einem Versatz ohne Zugabe von trockenem (pulverförmigen) Phenolharzbindemittel nach oben beschriebenem Verfahren hergestellt wurde, sowie ein bekanntes feuerfestes Material (ANKO 85MR5A von RHI Magnesita) als Vergleichsmaterialien verwendet.

Der Versuch wurde mit einer gemäß DIN EN ISO 1927-5 gegossenen Probe durchgeführt. Die Probe wurde gemäß DIN EN ISO 1927-5 bei einer Temperatur von 110°C bis zur Massenkonstanz getrocknet.
Prüfkörper: Zylinder (Höhe (h): 50 mm, Durchmesser (d): 40 mm,
Innenbohrung: 16 mm, Messmethode gemäß ISO 5013)

Die Messungen zum Erweichungsverhalten unter Druck (Druckerweichen) wurden gemäß DIN EN ISO 1893 durchgeführt. Dabei wurde eine Auflast von 0,2 MPa und eine Heizrate von 5°C/min in reduzierender Atmosphäre gewählt. Als Ergebnis wurde ein T0,5 Wert von >1700°C erhalten. D.h. das ist jene Temperatur, bei welcher die maximale thermische Ausdehnung des Probekörpers um 0,5% abgenommen hat. Die maximale Temperatur der Messung ist mit 1700°C limitiert.

Beim erfindungsgemäßen Material konnte, im Gegensatz zum bekannten feuerfesten Material ANKO 85MR5A, keine Erweichung bis zu einer Temperatur von 1700°C festgestellt werden. Die Zugabe von trockenem (pulverförmigen) Phenolharzbindemittel hatte keinen negativen Einfluß auf das Erweichungsverhalten unter Druck, wie sich insbesondere im Vergleich zum Material zeigt, das ohne Phenolharzbindemittel-Zugabe hergestellt wurde (Fig. 6).

### Versuch zur Messung der Wärmeleitfähigkeit nach Dr. Klasse:

Die in Tabelle 1 angegebenen Wärmeleitfähigkeiten des erfindungsgemäßen Materials sowie der Vergleichsmaterialien (DELTEK A115 von RHI Magnesita sowie des Materials, das ohne Zugabe von trockenem (pulverförmigen) Phenolharzbindemittel erzeugt wurde) wurden nach dem Verfahren von Dr. Klasse bestimmt (Klasse, F.; Heinz, A.; Hein, J.: Vergleichsverfahren zur Ermittlung der Wärmeleitfähigkeit keramischer Werkstoffe. Ber. DKG 34 (1957), S. 183 - 189). Die angegebenen Werte für 1000°C wurden dabei extrapoliert.

## Patentansprüche

1. Feuerfestes Material, das bei einer Temperatur von mindestens 1300°C, vorzugsweise von 1300°C bis 1750°C, thermisch behandelt ist, dass es eine nadelige Struktur aufweist und eine Kombination aus einer ersten Phase, einer zweiten Phase und einer dritten Phase umfasst, wobei:
die erste Phase 2-10 Gew.-% C, <5 Gew.-% N, 30-40 Gew.-% O, 50-70 Gew.-% Al und <5 Gew.-% Si, bezogen auf den Gesamtanteil der ersten Phase, umfasst,
die zweite Phase 1-7 Gew.-% C, 3-8 Gew.-% N, 25-35 Gew.-% O, 55-65 Gew.-% Al und <5 Gew.-% Si, bezogen auf den Gesamtanteil der zweiten Phase, umfasst, und
die dritte Phase <7 Gew.-% C, 14-28 Gew.-% N, 10-15 Gew.-% O, 52-63 Gew.-% Al und <20 Gew.-% Si, bezogen auf den Gesamtanteil der dritten Phase, umfasst.

2. Feuerfestes Material nach Anspruch 1, **dadurch gekennzeichnet, dass** die erste Phase Al₄O₄C umfasst oder aus Al₄O₄C besteht.

3. Feuerfestes Material nach Anspruch 1 oder 2, **dadurch gekennzeichnet, dass** die zweite Phase Al₂₈C₆N₆O₂₁ umfasst oder aus Al₂₈C₆N₆O₂₁ besteht.

4. Feuerfestes Material nach einem der Ansprüche 1 bis 3, **dadurch gekennzeichnet, dass** die dritte Phase eine Verbindung ausgewählt aus SiAl₆O₂N₆, SiAl₅O₂N₅, SiAl₄O₂N₄, Si₃Al₇O₃N₉ und Gemischen hiervon umfasst oder aus SiAl₆O₂N₆ besteht.

5. Feuerfestes Material nach einem der Ansprüche 1 bis 4, **dadurch gekennzeichnet, dass** das feuerfeste Material eine vierte Phase umfasst, wobei die vierte Phase <5 Gew.-% C, 26-36 Gew.-% N, <8 Gew.-% O, 56-66 Gew.-% Al und <5 Gew.-% Si, bezogen auf den Gesamtanteil der vierten Phase, umfasst und die vierte Phase vorzugsweise AlN umfasst oder aus AlN besteht.

6. Feuerfestes Material nach einem der Ansprüche 1 bis 5, **dadurch gekennzeichnet, dass** die nadelige Struktur Nadeln einer Länge in einem Bereich von 0,1-50 µm, vorzugsweise 0,1-30 µm, weiter vorzugsweise 2-30 µm und/oder einer Dicke in einem Bereich von 0,01-8 µm, vorzugsweise 0,2-5 µm, gemessen mittels Rasterelektronenmikroskopie, bei einer Anregungsspannung von 10 kV und einen Probenstrom von 1 nA, aufweist.

7. Feuerfestes Material nach einem der Ansprüche 1 bis 6, **dadurch gekennzeichnet, dass** ein minimales Verhältnis von Längen zu Dicken zumindest für einen Teil der Nadeln mindestens 4:1 ist.

8. Feuerfestes Material nach einem der Ansprüche 1 bis 7, **dadurch gekennzeichnet, dass** ein Anteil der Phasen mit nadeliger Struktur mindestens 0,01 Gew.-% vorzugsweise 0,1 Gew.-%, bezogen auf den Gesamtanteil des feuerfesten Materials, beträgt.

9. Versatz zum Herstellen eines feuerfesten Materials nach einem der Ansprüche 1 bis 8, wobei der Versatz die folgende Zusammensetzung umfasst:
a) Körnige Komponente im Grobanteil mit einer Partikelgröße in einem Bereich von 0,5-10 mm, ausgewählt aus MA-Spinell (Magnesiumaluminatspinell), Sintertonerde, Edelkorund, Braunkorund, Graukorund, Mullit, Bauxit, Andalusit, SiC, Schamotte, zirkoniumhaltige Komponenten und Gemischen hiervon;
b) Körnige Komponente im Feinanteil mit einer Partikelgröße in einem Bereich von <0,5 mm, ausgewählt aus Sintertonerde, Edelkorund, zirkoniumhaltige Komponenten und Gemischen hiervon;
c) Feinteiliges Al₂O₃, vorzugsweise kalzinierter Tonerde im Feinanteil mit einer Partikelgröße in einem Bereich von <0,5 mm;
d) Kohlenstoff, vorzugsweise Graphit und/oder Ruß, weiter vorzugsweise ein Gemisch aus Graphit und Ruß, noch weiter vorzugsweise ein Gemisch aus Graphit und Ruß mit einem Mischverhältnis in einem Bereich von 1:2 bis 2:1, noch weiter vorzugsweise ein Gemisch aus Graphit und Ruß mit einem Mischverhältnis von 1:1;
e) metallisches Aluminiumpulver (Al-Pulver);
f) Trockenes Phenolharzbindemittel, trockenes vorzugsweise pulverförmiges Phenolharzbindemittel; und
g) Kieselsol (Kieselsäure in wässriger kolloidaler Suspension), vorzugsweise Kieselsäure enthaltend SiO₂-Nanopartikel in wässriger kolloidaler Suspension.

10. Versatz nach Anspruch 9, **dadurch gekennzeichnet, dass** ein oder mehrere der folgenden Bestandteile in den folgenden Mengen, bezogen auf den Gesamtanteil der Zusammensetzung des Versatzes, vorliegen:
a) 50-80 Gew.-%, vorzugsweise 53-70 Gew.-%, weiter vorzugsweise 55-67 Gew.-%, noch weiter vorzugsweise etwa 59 Gew.-%, körnige Komponente im Grobanteil mit einer Partikelgröße in einem Bereich von 0,5-10 mm;
b) 5-35 Gew.-%, vorzugsweise 7-30 Gew.-%, weiter vorzugsweise 10-30 Gew.-%, noch weiter vorzugsweise etwa 19 Gew.-%, körnige Komponente im Feinanteil mit einer Partikelgröße in einem Bereich von <0,5 mm;
c) 0,05-15 Gew.-%, vorzugsweise 2-12 Gew.-%, weiter vorzugsweise 5-10 Gew.-%, noch weiter vorzugsweise etwa 7 Gew.-%, feinteiliges Al₂O₃;
d) 2-10 Gew.-%, vorzugsweise 3-8 Gew.-%, weiter vorzugsweise 3,5-6 Gew.-%, noch weiter vorzugsweise etwa 4,5 Gew.-%, Kohlenstoff;
e) 3-10 Gew.-%, vorzugsweise 4-9 Gew.-%, weiter vorzugsweise 5-8 Gew.-%, noch weiter vorzugsweise etwa 5 Gew.-%, metallisches Aluminiumpulver;
f) 0,1-4 Gew.-%, vorzugsweise 0,2-2 Gew.-%, weiter vorzugsweise 0,3-1 Gew.-%, noch weiter vorzugsweise etwa 0,5 Gew.-%, trockenes (vorzugsweise pulverförmiges) Phenolharzbindemittel;
g) 4-15 Gew.-%, vorzugsweise 5-12 Gew.-%, weiter vorzugsweise 6-8 Gew.-%, noch weiter vorzugsweise etwa 7 Gew. %, Kieselsol (Kieselsäure in wässriger kolloidaler Suspension), bevorzugt Kieselsäure enthaltend SiO₂-Nanopartikel in wässriger kolloidaler Suspension, wobei der Feststoffanteil (Anteil der SiO₂-Partikel) vorzugsweise in einem Bereich von 20 bis 50 Gew.-%, weiter vorzugsweise 30 bis 50 Gew.-%, bezogen auf das Gesamtgewicht der wässrigen kolloidalen Kieselsäuresuspension, liegt.

11. Grünkörper hergestellt aus einem Versatz nach Anspruch 9 oder 10, **dadurch gekennzeichnet, dass** der Grünkörper nach Trocknen vorzugsweise eine oder mehrere der folgenden Eigenschaften aufweist:
- eine offene Porosität von etwa 10-25 Vol%, gemessen nach DIN EN ISO 1927-6;
- eine Rohdichte in einem Bereich von 2,90-3,70 g/cm3, vorzugsweise etwa 2,98 g/cm3, gemessen nach DIN EN ISO 1927-6.

12. Grünköper hergestellt aus einem Versatz nach Anspruch 9 oder 10, **dadurch gekennzeichnet, dass** der Grünkörper nach Trocknen vorzugsweise eine oder mehrere der folgenden Eigenschaften aufweist:
- eine Kaltdruckfestigkeit von größer als 40 MPa, vorzugsweise größer als 50 MPa, besonders bevorzugt größer als 60 MPa, gemessen nach DIN EN ISO 1927-6;
- eine Kaltbiegefestigkeit von größer 6 MPa, vorzugsweise größer als 8 MPa, besonders bevorzugt größer als 9 MPa, gemessen nach DIN EN ISO 1927-6.

13. Verfahren zum Herstellen eines feuerfesten Materials nach einem der Ansprüche 1 bis 8, wobei das Verfahren die folgenden Schritte umfasst:
i. Bereitstellen eines Versatzes nach einem der Ansprüche 9 oder 10;
ii. Herstellen eines Grünkörpers aus dem Versatz, und
iii. Erhitzen des Grünkörpers auf eine Temperatur von mindestens 1300°C, vorzugsweise auf eine Temperatur in einem Bereich von 1300°C bis 1750°C.

14. Verwendung eines feuerfesten Materials nach einem der Ansprüche 1 bis 8, eines Grünkörpers hergestellt aus einem Versatz nach einem der Ansprüche 9 bis 10 zur Herstellung von feuerfesten Erzeugnissen für Stahlanwendungen, insbesondere Stahlpfanne, Verteiler, Lochsteine, CAS-OB-Glocken, feuerfeste Erzeugnisse für den Roheisenbereich, insbesondere Gusserzeugnissen, und/oder feuerfeste Erzeugnissen für den Flow-Control-Bereich, insbesondere Schieberplatten, Wechselausgüssen, Schattenrohre, Stopfen, Tauchrohre, Innenhülsen, Wehre, Dämme, Pralltöpfe und Düsen.
